# EUROPEAN PATENT APPLICATION

(11) **EP 4 029 591 A1**
(43) Date of publication of application: **20.07.2022**
(21) Application number: 21217707.5
(22) Date of filing: 24.12.2021
(51) Int. Cl.: B01D 53/62, B01D 53/78, B01D 53/96, G01F 23/00, G01F 23/62, G01F 23/72

(54) **AN AIR PURIFIER DETECTING LIQUID LEVEL**

(30) Priority: 15.01.2021 TR 202100608
(71) Applicant: Arçelik Anonim Sirketi, 34445 Istanbul (TR)
(72) Inventor: KANDEMIR, Nihat, 34445 ISTANBUL (TR); KESKIN, Ege, 34445 ISTANBUL (TR); CELIK, Filiz, 34445 ISTANBUL (TR)

(57) **Abstract**

The present invention relates to an air purifier (1) comprising a body (2) having an air inlet (I) through which the air in the environment is sucked and a clean air outlet (O) through which the cleaned air is released to the environment, a CO₂ adsorption unit (3) which chemically adsorbs the carbon dioxide in the air by supplying a basic solution, and a receptacle (4) suitable for receiving the basic solution, the acidic solution which enables the carbonate compound resulting from the conversion and adsorption of the carbon dioxide in the CO₂ adsorption unit (3) to be converted back to carbon dioxide, and the salt resulting from the reactions of the acidic and basic solutions during the air purification processes.

## Description

The present invention relates to an air purifier wherein the air is purified by processing the carbon dioxide in the air with acidic and basic solutions and the liquid solution amount in the receptacles in the body is detected.

The need for purifying the air inside indoor environments such as buildings, homes and offices is gaining importance for human health day by day. In particular, in devices that purify the air by filtering, the carbon dioxide ratio in the air remains constant and only matters such as dust, etc. are filtered and the inhaled air is purified from contents such as bacteria, dust, fungi, and viruses. There are state of the art embodiments wherein air purifiers comprise a water or steam chamber to adjust the humidity balance in the environment. In such devices, the liquid level in the receptacle containing water can be measured by means of a sensor such as pressure sensor, weight sensor, etc.

In devices that reduce the carbon dioxide concentration of the air by adsorbing the carbon dioxide in the air with acidic and basic solutions and discharging the same out of the environment (room, office, etc.), it is critical to accurately measure the liquid level of acidic and basic solutions. In said air purifier, the basic and acidic solutions are processed, respectively, with the air sucked into the device by means of a pump and fan such that the carbon dioxide in the air is adsorbed, and then the air purified of carbon dioxide is released back into the environment and the carbon dioxide adsorbed is discharged out of the body by means of a discharge channel.

The air purifier comprises at least one acid receptacle, at least one base receptacle, and a neutralization receptacle which receives the salt generated by processing with acid the compounds formed after the carbon dioxide is converted to carbonate and adsorbed. The salt generated in the neutralization receptacle is separated back into acid and base, and the acidic and basic solution required for the operation of the device is provided for a new air purification circulation. It is necessary to detect whether the solutions (acid, base or salt) in said receptacles are enough for the operation of the device. However, since the acidic and basic solutions chemically deform sensors such as pressure sensor, weight sensor, etc., an accurate measurement cannot be performed.

In liquid level measurement methods that use reed switches, only the presence or absence of the solution in the receptacle can be detected. The level of the liquid in the receptacle cannot be properly determined.

The aim of the present invention is the realization of an air purifier which measures the level of the liquid in a receptacle wherein a liquid solution such as acidic, basic, alkali, etc.

Another aim of the present invention is the realization of an air purifier wherein the liquid levels of a plurality of receptacles can be measured without affecting each other.

The air purifier of the present invention comprises a body having an air inlet through which the ambient air in an environment such as closed building, room, etc. is sucked, and a clean air outlet through which the cleaned air is released back into the environment. The air is sucked into a CO₂ adsorption unit in the body. First a basic solution is fed into said unit, and the carbon dioxide is converted to carbonate and adsorbed. The clean air purified of carbon dioxide is released back into the environment through a clean air outlet. The chemicals generated as a result of the air and the basic solution reaction are processed with an acidic solution, thus producing carbon dioxide again, and a salt solution is generated during the producing of carbon dioxide. The carbon dioxide separated from the ambient air is discharged out of the environment (room, etc.) by means of a separate discharge channel. The air purifier body comprises at least one receptacle suitable for receiving acidic and basic solutions. Moreover, there is also a salt receptacle which receives the salt solution generated as a result of the reactions.

In an embodiment of the present invention, the basic solution used can be sodium hydroxide (NaOH) or potassium hydroxide (KOH).

In an embodiment of the present invention, the acidic solution used can be sulfuric acid (H₂SO₄).

In an embodiment of the present invention, a large receptacle comprises separated compartments, and each compartment receives one of the acidic, basic and salt solutions.

In an embodiment of the present invention, the acidic, basic and salt solutions are put into receptacles which are positioned one below the other and/or side by side.

The air purifier of the present invention provides solutions to problems of the sensors failing to perform measurements in acidic, basic and corrosive environments in the convention liquid level detection methods.

Since the acidic, basic and salt solutions in the air purifier of the present invention are colorless, it is not possible to use infrared distance sensors.

State of the art capacitive liquid level measurement methods cause problems since the pH levels of said solutions will corrode the uncoated metal surfaces in a short time.

Since the pressure sensors used in state of the art liquid level detection methods are damaged by acidic and basic solution vapors, an accurate measurement cannot be performed.

The air purifier of the present invention comprises a buoy which is disposed in the receptacle, which has at least one magnet and which is manufactured from a material not deformed by acidic and/or basic and/or salt solutions.

In an embodiment of the present invention, the buoy is manufactured from a material selected from polypropylene, polychlorotrifluoroethylene (Kel-F^{®}), ethylene chlorotrifluoroethylene (ECTFE), low-density polyethylene (LDPE), polyvinylidene fluoride (PVDF), polytetrafluoroethylene (PTFE), polyphenylene sulfide (PPS), polyvinyl chloride (PVC), polycarbonate (PC) and/or acrylonitrile butadiene styrene (ABS).

By means of the present invention, an air purifier is realized wherein the levels of the acidic, basic and salt solutions in the receptacle are correctly detected.

The model embodiments that relate to the air purifier realized in order to attain the aim of the present invention are illustrated in the attached figures, where:

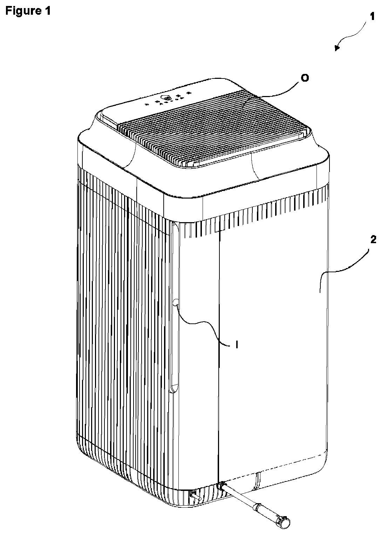

**Figure 1** - is the perspective view of the air purifier in an embodiment of the present invention.

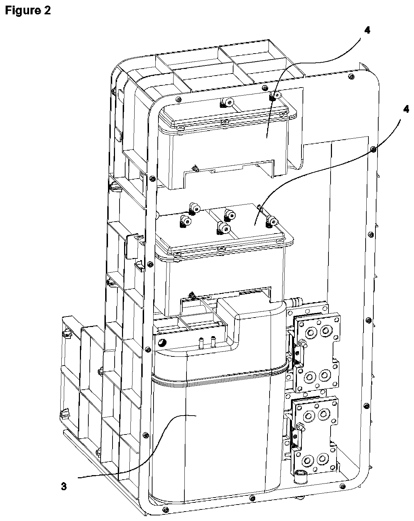

**Figure 2** - is the perspective view of the interior of the body in the air purifier in an embodiment of the present invention.

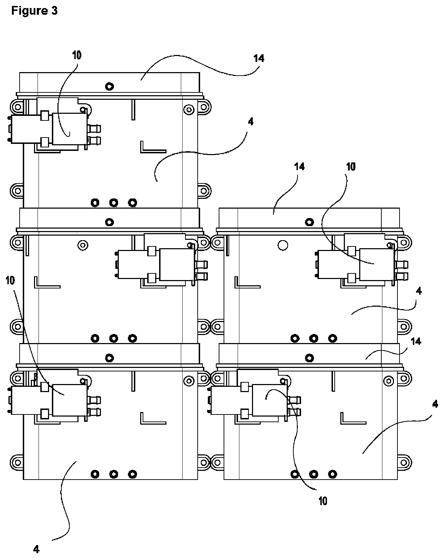

**Figure 3** - is the front view of the arrangement of the plurality of receptacles and sensor lids in the air purifier in an embodiment of the present invention.

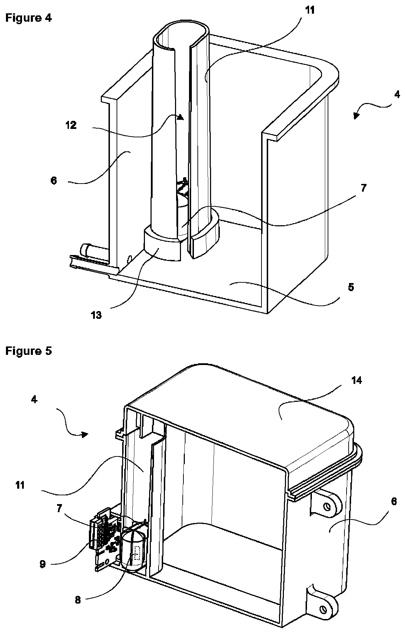

**Figure 4** - is the view of the interior of the receptacle, the buoy and the channel in the air purifier in an embodiment of the present invention.
**Figure 5** - is the view of the receptacle in the air purifier in an embodiment of the present invention.

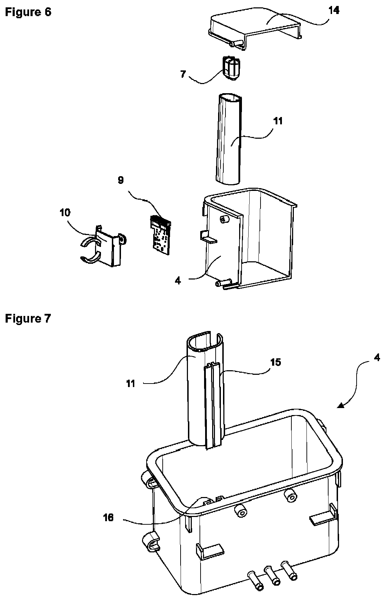

**Figure 6** - is the exploded view of the receptacle in the air purifier in an embodiment of the present invention.
**Figure 7** - is the view wherein the channel is mounted to the receptacle wall in the air purifier in an embodiment of the present invention.

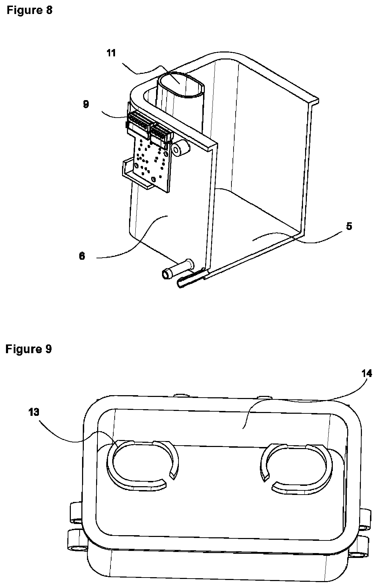

**Figure 8** - is the view of the receptacle and the sensor lid on the outside of the receptacle in the air purifier in an embodiment of the present invention.
**Figure 9** - is the view of the lid covering the receptacle in the air purifier in an embodiment of the present invention.

The elements illustrated in the figures are numbered as follows:
- 1.: Air purifier
- 2.: Body
- 3.: CO₂ adsorption unit
- 4.: Receptacle
- 5.: Base
- 6.: Wall
- 7.: Buoy
- 8.: Magnet
- 9.: Sensor
- 10.: Sensor lid
- 11.: Channel
- 12.: Opening
- 13.: Housing
- 14.: Lid
- 15.: Slide
- 16.: Slide path

I: Air inlet
O: Clean air outlet

The air purifier (1) of the present invention comprises a body (2) having an air inlet (I) through which the air in the environment is sucked and a clean air outlet (O) through which the cleaned air is released to the environment, a CO₂ adsorption unit (3) which chemically adsorbs the carbon dioxide in the air by supplying a basic solution, and a receptacle (4) suitable for receiving the acidic solution which enables the carbonate compound resulting from the conversion and adsorption of the carbon dioxide in the CO₂ adsorption unit (3) to be converted back to carbon dioxide, and the salt resulting from the reactions of the acidic and basic solutions during the air purification processes.

The air purifier (1) of the present invention comprises a buoy (7) which is disposed in the receptacle (4) and which has a magnet (8), and at least one sensor (9) which measures the liquid level in the receptacle (4) by detecting the magnetic field changes in the magnet (8) and which is disposed outside the receptacle (4) wherein the measurement is performed.

In the air purifier (1) of the present invention, the buoy (7) placed into the receptacle (4) rises together with the liquid filled into the receptacle (4). The magnetic field generated by the magnet (8) in the buoy (7) is detected by means of the sensor (9) such that the liquid level in the receptacle (4) is accurately determined. As the sensor (9) is positioned outside the receptacle (4), the sensor (9) is not affected by the acidic, basic or salt solutions, and performs accurate measurements.

In an embodiment of the present invention, the air purifier (1) comprises a buoy (7) manufactured from a material selected from polypropylene, polychlorotrifluoroethylene, ethylene chlorotrifluoroethylene (ECTFE), low-density polyethylene (LDPE), polyvinylidene fluoride (PVDF), polytetrafluoroethylene (PTFE), polyphenylene sulfide (PPS), polyvinyl chloride (PVC), polycarbonate (PC) and/or acrylonitrile butadiene styrene (ABS). Said materials are not deformed by acid or base. Thus, the buoy (7) moving in the solution is prevented from being chemically corroded.

In an embodiment of the present invention, the air purifier (1) comprises a channel (11) which extends from the base (5) along the receptacle (4), which has a height almost equal to the height of the receptacle (4), wherein the buoy (7) is movably placed, and which has at least one opening (12) allowing the liquid in the receptacle (4) to enter the channel (11). Thus, the buoy (7) does not turn upside down in the channel (11), and rises and descends as positioned on the base (5) of the receptacle (4) such that the sensor (9) can correctly detect the magnetic field changes. By means of the opening (12) on the channel (11), the solution in the receptacle (4) enters the channel (11).

In an embodiment of the present invention, the air purifier (1) comprises an opening (12) extending along the channel (11). Thus, the solution in the receptacle more quickly enters the channel (11).

In an embodiment of the present invention, the air purifier (1) comprises the channel (11) which is fixed in the receptacle (4) by being placed into a housing (13) arranged on the base (5) of the receptacle (4). Thus, the channel (11) is prevented from tipping over and the buoy (7) from turning upside down due to the movement of the liquid.

In an embodiment of the present invention, the air purifier (1) comprises a lid (14) covering the receptacle (4), and a housing (13) which is arranged on the lid (14) and which enables the channel (11) to be fixed to the lid (14). Thus, the channel (11) is fixed to both the base (5) and the lid (14) and firmly placed into the receptacle (4).

In an embodiment of the present invention, the air purifier (1) comprises a slide (15) which is provided on the channel (11) and the wall (6) having a slide path (16) wherein the slide (15) is slidably placed. Thus, the channel (11) is easily and quickly placed into the receptacle (4).

In an embodiment of the present invention, the air purifier (1) comprises the channel (11) which is placed so as to almost contact a wall (6) of the receptacle (4), and at least one sensor (9) which is provided on the part, outside the receptacle (4), of the wall (6) almost in contact with the channel (11) so as to be aligned with the channel (11). Consequently, the buoy (7) in the channel (11) and the sensor (9) are positioned close to each other such that the sensor (9) correctly detects the magnetic waves.

In an embodiment of the present invention, the air purifier (1) comprises at least two receptacles (4) which are positioned one below the other and/or side by side, sensors (9) which are diagonally positioned on the receptacles (4) positioned one below the other, and sensors (9) which are positioned in the receptacles (4) positioned side by side such that there is a wall (6) of a receptacle (4) with no sensor (9). Thus, in the devices (1) with a plurality of receptacles (4), the liquid level measurements in a plurality of receptacles (4) are carried out with the sensor (9) and the magnets (8) affecting other receptacles (4).

In an embodiment of the present invention, the air purifier (1) comprises a sensor lid (10) which covers the sensor (9). Said lid (10) protects the sensor (9) and the card supporting the sensor (9) against possible acid, base or salt leaks.

In an embodiment of the present invention, the air purifier (1) comprises a sensor lid (10) coated with metal film. Thus, the sensor lid (10) is protected against chemical corrosion while the sensor (9) is enabled to perform correct magnetic measurements.

In an embodiment of the present invention, the air purifier (1) comprises the sensor lid (10) comprising at least one additional coating on the metal film, manufactured from a material selected from polypropylene, polychlorotrifluoroethylene, ethylene chlorotrifluoroethylene (ECTFE), low-density polyethylene (LDPE), polyvinylidene fluoride (PVDF), polytetrafluoroethylene (PTFE), polyphenylene sulfide (PPS), polyvinyl chloride (PVC), polycarbonate (PC) and/or acrylonitrile butadiene styrene (ABS).

By means of the present invention, an air purifier (1) is realized wherein the liquid levels in the receptacles (4) can be measured without being chemically affected by the acidic, basic and salt solutions therein.

## Claims

1. An air purifier (1) **comprising** a body (2) having an air inlet (I) through which the air in the environment is sucked and a clean air outlet (O) through which the cleaned air is released to the environment, a CO₂ adsorption unit (3) which chemically adsorbs the carbon dioxide in the air by supplying a basic solution, and at least one receptacle (4) suitable for receiving the basic solution, the acidic solution which enables the carbonate compound resulting from the conversion and adsorption of the carbon dioxide in the CO₂ adsorption unit (3) to be converted back to carbon dioxide, and the salt resulting from the reactions of the acidic and basic solutions during the air purification processes, **characterized by** a buoy (7) which is disposed in the receptacle (4) and which has a magnet (8), and at least one sensor (9) which measures the liquid level in the receptacle (4) by detecting the magnetic field changes in the magnet (8) and which is disposed outside the receptacle (4) wherein the measurement is performed.

2. An air purifier (1) as in Claim 1, **characterized by** a buoy (7) manufactured from a material selected from polypropylene, polychlorotrifluoroethylene, ethylene chlorotrifluoroethylene (ECTFE), low-density polyethylene (LDPE), polyvinylidene fluoride (PVDF), polytetrafluoroethylene (PTFE), polyphenylene sulfide (PPS), polyvinyl chloride (PVC), polycarbonate (PC) and/or acrylonitrile butadiene styrene (ABS).

3. An air purifier (1) as in Claim 1 or 2, **characterized by** a channel (11) which extends from the base (5) along the receptacle (4), which has a height almost equal to the height of the receptacle (4), wherein the buoy (7) is movably placed, and which has at least one opening (12) allowing the liquid in the receptacle (4) to enter the channel (11).

4. An air purifier (1) as in Claim 3, **characterized by** an opening (12) which extends along the channel (11).

5. An air purifier (1) as in Claim 3 or 4, **characterized by** the channel (11) which is fixed in the receptacle (4) by being placed into a housing (13) arranged on the base (5) of the receptacle (4).

6. An air purifier (1) as in Claim 5, **characterized by** a lid (14) covering the receptacle (4), and a housing (13) which is arranged on the lid (14) and which enables the channel (11) to be fixed to the lid (14).

7. An air purifier (1) as in any one of the Claims 3 to 6, **characterized by** a slide (15) which is provided on the channel (11) and the wall (6) having a slide path (16) wherein the slide (15) is slidably placed.

8. An air purifier (1) as in any one of the Claims 3 to 7, **characterized by** the channel (11) which is placed so as to almost contact a wall (6) of the receptacle (4), and at least one sensor (9) which is provided on the part, outside the receptacle (4), of the wall (6) almost in contact with the channel (11) so as to be aligned with the channel (11).

9. An air purifier (1) as in any one of the above claims, **characterized by** at least two receptacles (4) which are positioned one below the other and/or side by side, sensors (9) which are diagonally positioned on the receptacles (4) positioned one below the other, and sensors (9) which are positioned in the receptacles (4) positioned side by side such that there is a wall (6) of a receptacle (4) with no sensor (9).

10. An air purifier (1) as in any one of the above claims, **characterized by** a sensor lid (10) which covers the sensor (9).

11. An air purifier (1) as in Claim 10, **characterized by** a sensor lid (10) coated with metal film.

12. An air purifier (11) as in Claim 10 or 11, **characterized by** the sensor lid (10) comprising at least one additional coating on the metal film, manufactured from a material selected from polypropylene, polychlorotrifluoroethylene, ethylene chlorotrifluoroethylene (ECTFE), low-density polyethylene (LDPE), polyvinylidene fluoride (PVDF), polytetrafluoroethylene (PTFE), polyphenylene sulfide (PPS), polyvinyl chloride (PVC), polycarbonate (PC) and/or acrylonitrile butadiene styrene (ABS).
